# FASCICULE DE BREVET EUROPEEN

(11) **EP 0 855 496 B1**
(45) Date de publication et mention de la délivrance du brevet: **13.08.2003**
(21) Numéro de dépôt: 98400106.5
(22) Date de dépôt: 21.01.1998
(51) Int. Cl.: F01N 7/14, F01N 7/08, F16L 11/02, F16L 11/115, F16L 59/153

(54) **Flexible de découplage monté dans une ligne d'échappement d'un moteur de véhicule automobile**
Flexible Entkupplungsvorrichtung eingebaut im Abgasstrang eines Kraftfahrzeugs
Flexible decoupling joint mounted in an exhaust system of a motor vehicle

(30) Priorité: 23.01.1997 FR 9700659
(43) Date de publication de la demande: 29.07.1998
(73) Titulaire: HUTCHINSON, 75008 Paris (FR)
(72) Inventeur: Mahin, Daniel, 37510 Savonnieres (FR)
(74) Mandataire: Doireau, Marc

(56) Documents cités:
- EP-A- 0 145 020
- EP-A- 0 327 148
- DE-U- 8 705 612
- US-A- 5 390 962

## Description

La présente invention concerne un flexible de découplage monté dans une ligne d'échappement d'un moteur à combustion interne.

D'une manière générale, une ligne d'échappement d'un moteur de véhicule automobile est montée en sortie du collecteur d'échappement du moteur. Cette ligne est constituée, le plus souvent, de plusieurs tubulures métalliques qui sont raccordées entre elles par des demi-colliers métalliques rigides. La ligne d'échappement est suspendue à la caisse du véhicule par des liaisons souples qui sont formées par des sangles ou des plots de suspension généralement à base d'élastomère.

Une telle ligne d'échappement est une pièce d'une grande longueur et d'un poids relativement important, ce qui n'est pas sans poser de problèmes dont les principaux vont être évoqués succinctement ci-après.

Une ligne d'échappement est excitée en vibration par le fonctionnement du moteur dans une plage étendue de fréquences allant du régime de ralenti au fonctionnement à pleine charge du moteur. Cette ligne, bien que suspendue à la caisse du véhicule par des liaisons souples, constitue donc une source de vibrations et, du fait de sa grande longueur, cette ligne favorise la transmission des vibrations dont une partie non négligeable est retransmise à la caisse du véhicule par les différents points d'accrochage. Il en résulte des bruits parasites qui réduisent le confort à l'intérieur de l'habitacle du véhicule.

Une ligne d'échappement est également soumise à de grands déplacements en toute direction induits par le fonctionnement du moteur ainsi que par la dilatation thermique lors des arrêts et des redémarrages du véhicule.

En effet, la ligne d'échappement subit notamment des mouvements de rotation autour de son axe pouvant dépasser 10° d'angle, en particulier lors du démarrage par suite d'un basculement du moteur sur ses plots de suspension, des mouvements de traction lors , d'accélérations brutales ou des mouvements de compression lors de décélérations multiples pouvant dépasser une amplitude de l'ordre de 20 mm dans l'axe de la tubulure.

Les tubulures de la ligne d'échappement sont également soumises à des phénomènes d'attaque chimique provoqués par les gaz et les condensats qui sont véhiculés par la ligne d'échappement.

Enfin, dans une ligne d'échappement, on atteint très facilement des températures de l'ordre de 800-950° C sur la partie amont de la ligne, c'est-à-dire en sortie du collecteur d'échappement, et de l'ordre de 500 à 600° C au niveau de l'extrémité aval de la ligne, c'est-à-dire que la ligne d'échappement doit résister à des températures extrêmement élevées et ce sur une très longue durée de l'ordre de celle de la vie du véhicule pouvant dépasser les 150 000 km.

Pour satisfaire toutes ces contraintes, on utilise des tubulures métalliques traitées contre l'oxydation interne et la corrosion externe, et il est d'usage courant d'installer sur au moins un des tronçons de la ligne d'échappement, une pièce intermédiaire à rotule ou une partie flexible communément dénommée « flexible de découplage » pour absorber une partie des déplacements et/ou déformations de la ligne, réduire les contraintes mécaniques et amortir les vibrations. Ces flexibles de découplage, seuls capables d'atténuer certaines vibrations, sont généralement constitués de tubes métalliques sous une forme agrafée ou ondulée, qui sont protégés extérieurement par une armature tissée ou tricotée par exemple à base de fils métalliques continus généralement en acier inoxydable.

Les constructeurs automobiles considèrent que ces flexibles de découplage entièrement métalliques sont utiles mais présentent cependant des inconvénients concernant leur durée de vie qui ne correspond pas à celle de la ligne d'échappement, car ces flexibles supportent difficilement l'ensemble des déplacements et/ou déformations induits par le moteur suivant les trois axes, ou ne les acceptent que partiellement, et procurent une filtration insuffisante des bruits produits par les vibrations de la ligne d'échappement.

Ces défauts sont notamment accentués lorsque le flexible de découplage est monté à la sortie du collecteur d'échappement. En effet, à ce niveau, le flexible de découplage doit supporter une grande partie de la ligne d'échappement, ce qui lui impose des contraintes mécaniques supplémentaires, notamment en traction, qui réduisent sa durée de vie et ses présumées propriétés de filtration des vibrations mécaniques.

En outre, ces flexibles de découplage doivent être parfaitement étanches au flux de gaz sous pression, sachant que le débit de fuite toléré est généralement très faible, de l'ordre de quelques litres/minute afin d'éviter toute entrée d'air vers le pot catalytique, lorsque le flexible est monté en amont de ce pot, sachant que toute entrée d'air provoque la destruction du pot catalytique. De plus, toute fuite même minime est génératrice d'un bruit sous la forme d'un sifflement.

Les flexibles de découplage évoqués précédemment sont entièrement métalliques pour pouvoir supporter la température des gaz d'échappement, sachant que l'utilisation de matériaux souples tels que les élastomères par exemple ou tout autre matériau organique constituant une structure multicouches n'est pas envisageable compte tenu du niveau de température atteint par le flux de gaz d'échappement. Il n'existe pas de matériaux souples organiques capables de lier par adhésion une structure composite au-delà de 350°C de manière durable.

Le document EP-A-0 145 020 décrit un flexible de découplage selon le préambule de la revendication 1.

Le but de l'invention est de concevoir un flexible de découplage pour une ligne d'échappement, qui possède une grande capacité de déplacement et/ou de déformation en toute direction, associé à un excellent niveau de filtration acoustique et qui puisse résister durablement tout au long de la vie du véhicule automobile aux contraintes mécaniques et thermiques sans risque de fuite ou de rupture prématurée.

A cet effet, l'invention propose un flexible de découplage pouvant être monté dans une ligne d'échappement d'un moteur de véhicule automobile, ce flexible comprenant au moins une ossature métallique cylindrique, souple et déformable de manière élastique en toute direction, qui sert de support pour un ensemble de couches superposées, cet ensemble de couches comprenant au moins une couche constituée de tissus à base de fibres minérales et/ou métalliques, une couche d'étanchéité de faible épaisseur constituée d'un feuillard métallique, minéral ou polymérique, une couche d'isolation thermique suffisamment épaisse pour réduire la température externe du flexible, et une couche externe de protection, flexible qui est caractérisé en ce que l'ossature métallique comprend au moins une ossature interne et une ossature externe qui entourent l'ensemble des couches pour les bloquer en position, et en ce que les ossatures interne et externe sont également destinées à servir de moyen de raccordement du flexible à la tubulure d'échappement du véhicule par des colliers rapportés ou par sertissage, par exemple.

Selon un mode de réalisation de l'invention, le flexible peut être constitué par :
- au moins une ossature métallique interne de maintien des différentes couches et permettant de conserver le dimensionnel intérieur du flexible malgré les sollicitations imposées,
- une couche interne en contact direct avec le flux de gaz chaud et qui puisse résister durablement aux contraintes thermiques rencontrées, ainsi qu'à l'attaque chimique par les gaz et les condensats d'échappement, tout en conservant une grande souplesse de déplacement et/ou de déformation,
- une ou plusieurs couches formant barrière d'étanchéité aux gaz d'échappement sous pression et ce, à la température du flux de gaz,
- une ou plusieurs couches d'isolation thermique permettant de réduire la température du flux de gaz vers l'extérieur du flexible,
- une couche externe étanche à la pénétration d'eau par l'extérieur du flexible et suffisamment résistante pour supporter les diverses formes d'agression rencontrées sous la caisse du véhicule, et
- au moins une ossature externe qui assure le maintien en position des différentes couches ainsi superposées sans agent d'adhésion intermédiaire et qui, de par son positionnement, permet au flexible d'avoir la souplesse d'ensemble requise.

A titre d'exemple, les ossatures interne et externe peuvent être réalisées par des ressorts métalliques hélocoïdaux, les extrémités de ces ressorts pouvant être utilisées pour effectuer le raccordement du flexible à la tubulure d'échappement.

Un flexible de découplage selon l'invention est ainsi capable de satisfaire à toutes les contraintes qui ont été évoquées précédemment, c'est-à-dire qu'il présente toutes les propriétés requises et les avantages qui en découlent, en particulier une durée de vie notablement augmentée et une efficacité accrue au niveau de l'isolation phonique.

D'autres avantages, caractéristiques et détails de l'invention ressortiront de la description explicative qui va suivre faite en référence à des dessins annexés, donnés uniquement à titre d'exemple et dans lesquels :
- la figure 1 est une vue schématique d'une ligne d'échappement d'un moteur de véhicule automobile, et
- la figure 2 est une demi-vue en coupe longitudinale d'un flexible de découplage selon l'invention et qui est destiné à être monté dans la ligne d'échappement illustrée sur la figure 1.

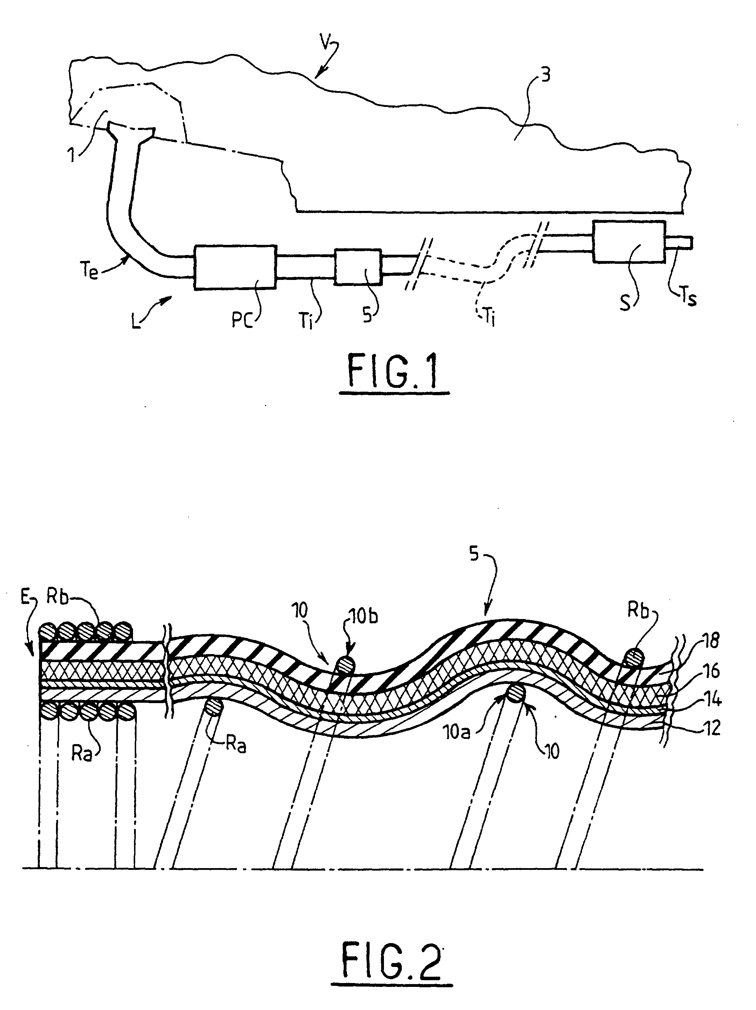

Sur la figure 1, la ligne d'échappement L pour un moteur de véhicule automobile V est montée à la sortie du collecteur d'échappement 1 du moteur. Cette ligne L comprend par exemple une tubulure amont ou d'entrée Te, un pot catalytique PC, une ou plusieurs tubulures intermédiaires Ti, un silencieux S et une tubulure aval ou de sortie Ts. Les différents éléments constitutifs de cette ligne L sont métalliques et raccordés entre eux par des demi-colliers métalliques (non représentés), et la ligne L est suspendue à la caisse 3 du véhicule V par des moyens 4 tels que des sangles ou des plots de suspension en élastomère.

A l'heure actuelle, la structure de ce type de ligne d'échappement L est complétée par un flexible de découplage 5 pour les raisons évoquées précédemment.

Un flexible de découplage 5 selon l'invention est illustré sur la figure 2. Ce flexible de découplage 5 comprend notamment au moins une ossature métallique cylindrique 10, souple et déformable de support d'un ensemble E de plusieurs couches superposées, ce support servant également d'élément de liaison pour permettre le raccordement du flexible 5 à la ligne d'échappement L.

D'une manière générale, le flexible de découplage 5 conforme à l'invention est conçu de manière à pouvoir se déformer de manière élastique en toute direction suivant les trois axes pour absorber notamment toutes les déformations mécaniques et thermiques qu'il va subir, c'est-à-dire que l'ossature de support ainsi que les différentes couches du flexible 5 doivent être suffisamment souples ou flexibles, en sachant que les différentes couches doivent également remplir un ensemble de fonctions vis-à-vis notamment de la température élevée des gaz d'échappement, de l'agression chimique de ces gaz et des condensats d'échappement, et de l'agression des agents extérieurs.

Le flexible de découplage 5 comprend une couche interne 12 qui est destinée à être au contact direct avec le flux de gaz chaud et les condensats d'échappement. Cette couche 12 doit être suffisamment souple et doit pouvoir résister durablement aux contraintes thermiques rencontrées, en particulier aux chocs thermiques répétés, ainsi qu'à l'agression ou attaque chimique par le flux de gaz et les condensats d'échappement, tout en conservant une grande souplesse de déformation et/ou de déplacement. En outre, il ne faut pas que ces contraintes provoquent l'extraction de particules dans cette couche interne 12, notamment lorsque le flexible de découplage 5 est monté en amont du pot catalytique PC. En effet, l'intrusion de telles particules dans le pot catalytique PC entraîne automatiquement une détérioration de ce pot qui nécessite son remplacement.

D'une manière générale, cette couche interne 12 est constituée par au moins une couche textile ou métallique souple, qui est réalisée à partir d'un matériau de haute résistance thermique et mécanique. Les matériaux constituant de cette couche interne 12 peuvent être choisis parmi les fils ou fibres métalliques de type inoxydable formés à partir de l'acier ou d'un quelconque alliage de métaux, comme par exemple des alliages à base de nickel et/ou de chrome. Cette couche interne 12 peut être également réalisée à partir de fils ou fibres textiles de céramique, de silice, de quartz ou de bore, mais peut aussi être réalisée à partir de fils ou fibres de verre résistant à une haute température. Cette couche interne 12 peut être réalisée à partir d'un mélange de ces différentes fibres ou fils pour créer une couche composite ayant les propriétés requises.
A titre d'exemple, la couche interne 12 peut être constituée par un tissu complexe associant des fibres minérales de haute résistance chimique comme par exemple des fibres de silice, de quartz et/ou de céramique avec des fibres métalliques de type inoxydable, afin d'offrir une résistance optimale à la température et aux chocs thermiques répétés, ainsi qu'à l'agression chimique par les gaz et condensats d'échappement.

La couche interne 12 peut être fabriquée par tissage, tricotage ou tressage mono ou tridimensionnel, pour réaliser une couche simple ou composite sous la forme d'une gaine continue ou d'un tissu plan enroulé radialement suivant une ou plusieurs couches avec arrêt par une ligne de couture constituée par exemple en un fil multifilaments à base de fibres métalliques inoxydables.

Le flexible de découplage 5 comprend également au moins une couche d'étanchéité 14 au flux des gaz d'échappement sous pression. Cette couche d'étanchéité 14, qui doit également être souple et déformable, peut être réalisée à partir d'une ou plusieurs couches formant barrière d'étanchéité aux gaz et ce, à la température de ces gaz. La ou chaque couche d'étanchéité 14 est continue, de faible épaisseur (de l'ordre de 0,3 mm par exemple) et réalisée à partir d'un film ou feuillard métallique inoxydable en acier ou un alliage à base de nickel, par exemple. Cette couche d'étanchéité 14 peut également être réalisée à partir d'un film minéral de particules plates laminées sur un support textile ou métallique, ces particules pouvant être du mica, du quartz ou de silice, ou tout autre matériau minéral à haut point de fusion pouvant être laminé en fines feuilles continues. La couche d'étanchéité 14 peut être rapportée à tout niveau du flexible par un rubannage hélicoïdal, par enroulement radial ou tout autre procédé de montage.

Le flexible de découplage 5 comprend également au moins une couche d'isolation thermique 16 qui est constituée d'un matelas réfractaire et suffisamment épais pour que la température externe du flexible ne dépasse pas une valeur de l'ordre de 350°C. Cette couche d'isolation thermique 16 est par exemple constituée d'un matériau sous la forme d'un feutre aiguilleté ou d'un tissu réfractaire tridimensionnel de forte densité pour réaliser un matelas suffisamment épais, compact mais déformable et de bonne conductibilité thermique. Ce matelas doit conserver sa compacité au cours du temps et cela peut avantageusement être obtenu avec un matériau à base de fibres non compressibles.

Le flexible de découplage 5 comprend également une couche de protection externe 18 contre les diverses formes d'agressions rencontrées sous la caisse du véhicule (gravillonnage, sel, projection d'hydrocarbures, etc...). Cette couche 18 souple et déformable doit également présenter une excellente tenue au vieillissement, être étanche à l'eau pour éviter toute pénétration d'humidité au coeur du flexible. Cette couche externe 18 peut être réalisée à partir d'un élastomère du type silicone par exemple qui puisse résister à des températures de l'ordre de 350°C. Cette couche externe 18 peut être avantageusement renforcée par un ou plusieurs tissus à mailles ouvertes qui sont réalisés à partir de fils métalliques ou textiles très résistant mécaniquement. En variante, l'élastomère constituant la couche externe 18 peut être emprisonné dans une chaussette tricotée à mailles ouvertes réalisée en fils métalliques inoxydables.

Toutes ces différentes couches 12, 14, 16 et 18 sont superposées les unes aux autres et sont maintenues en position par l'ossature de support 10 sans qu'il soit nécessaire de prévoir un quelconque agent d'adhérisation entre deux couches successives.

D'une manière générale, l'ossature de support 10 est une ossature métallique cylindrique, souple et déformable en toute direction.

Selon un mode de réalisation donné à titre d'exemple, cette ossature de support 10 comprend une ossature interne 10a et une ossature externe 10b entre lesquelles sont emprisonnées et maintenues en position l'ensemble E des différentes couches du flexible 5.

Ces deux ossatures 10a et 10b peuvent être constituées par deux ressorts hélicoïdaux Ra et Rb, le ressort Rb prenant appui sur le ressort interne Ra pour bloquer en position les différentes couches du flexible 5.

Dans leur partie centrale, les deux ressorts Ra et Rb présentent des spires non jointives, et les spires du ressort Ra sont montées dans le pas des spires du ressort Rb, ou inversement. Ainsi, le flexible de découplage 5 présente un aspect convoluté à l'intérieur et à l'extérieur, ce qui augmente sa souplesse et assure un blocage définitif en position des différentes couches emprisonnées entre les deux ressorts Ra et Rb.

A chacune de leurs extrémités, les ressorts Ra et Rb présentent avantageusement des spires jointives pour constituer des surfaces rigides. Ces surfaces, qui s'étendent sur une longueur d'au moins 1 cm, sont utilisées pour permettre le raccordement du flexible de découplage 5 5 aux extrémités des deux tubulures de la ligne L entre lesquelles le flexible 5 est intercalé. Un tel raccordement peut être réalisé au moyen de colliers rigides ou par sertissage, par exemple.

Le flexible de découplage 5 selon l'invention peut être monté en tout endroit de la ligne d'échappement L, notamment en amont du pot catalytique PC, voire même directement à la sortie du collecteur d'échappement 1. En effet, dans ce dernier cas, le flexible de découplage subit alors le maximum de contraintes car il doit supporter une grande partie de la ligne, c'est-à-dire résister à de fortes charges en traction qui peuvent être supérieures à 15 DAN, et supporter également les plus hauts niveaux d'exposition thermique et de pression des gaz (de l'ordre de 3 à 4 bars), tout en présentant une bonne isolation phonique. Le flexible selon l'invention satisfait à ces contraintes, sachant cependant que sa longueur doit être limitée pour éviter des phénomènes de cognement de la ligne d'échappement L contre la caisse 3 du véhicule V.

D'une manière générale, selon le modèle du véhicule, il appartient au constructeur de déterminer le choix de l'emplacement le plus approprié pour le flexible de découplage, notamment pour obtenir une efficacité maximale en termes de réduction des bruits transmis à la caisse du véhicule. Lorsque le flexible est monté après le pot catalytique, on obtient les meilleurs résultats car le débit de fuite admissible et l'extraction de particules dans la couche interne du flexible sont moins préjudiciables, et les niveaux de température et de pression sont moins élevés. En outre, on peut augmenter la longueur du flexible pour améliorer l'isolation phonique.

D'une manière générale, le nombre des couches emprisonnées entre les deux ossatures cylindriques 10a et 10b, n'est pas essentiel dès l'instant où, dans leur ensemble, ces couches assurent au moins les fonctions anticorrosion au flux des gaz et résistance à la température de ces gaz pour la couche interne, barrière d'étanchéité aux gaz et isolation thermique pour les couches intermédiaires, et résistance aux agents extérieurs pour la couche externe.

Bien entendu, le flexible de découplage 5 peut comprendre des couches supplémentaires simples ou composites en plus de celles décrites en référence à la figure 2, ces couches ayant pour objet de renforcer ou d'améliorer les propriétés du flexible de découplage 5, en particulier sa souplesse, sa tenue mécanique et thermique, son vieillissement, son isolation phonique,...

## Revendications

1. Flexible de découplage pouvant être monté dans une ligne d'échappement (L) d'un moteur de véhicule automobile (V), ce flexible (5) comprenant au moins une ossature métallique cylindrique (10), souple et déformable de manière élastique en toute direction, qui sert de support pour un ensemble (E) de couches superposées, cet ensemble (E) de couches comprenant au moins une couche (12) constituée de tissus à base de fibres minérales et/ou métalliques, une couche d'étanchéité (14) de faible épaisseur constituée d'un feuillard métallique, minéral ou polymérique, une couche (16) d'isolation thermique suffisamment épaisse pour réduire la température externe du flexible, et une couche externe (18) de protection, **caractérisé en ce que** l'ossature métallique (10) comprend au moins une ossature interne (10a) et une ossature externe (10b) qui entourent l'ensemble (E) des couches (12, 14, 16, 18) pour les bloquer en position, et **en ce que** les ossatures interne (10a) et externe (10b) sont également destinées à servir de moyen de raccordement du flexible à la ligne d'échappement (L) du véhicule par des colliers rapportés ou par sertissage, par exemple.

2. Flexible de découplage selon la revendication 1, **caractérisé en ce que** les ossatures interne (10a) et externe (10b) sont réalisées chacune sous la forme d'au moins un ressort hélicoïdal (Ra/Rb) à spires non jointives dans sa partie centrale ou partie active du flexible, et à spires jointives à chacune de ses extrémités.

3. Flexible de découplage selon l'une quelconque des revendications précédentes, **caractérisé en ce que** la couche (12) constituée à base de fibres minérales et/ou métalliques est une couche interne en contact direct avec le flux de gaz chaud d'échappement, qui est réalisée à partir d'un tissu complexe associant des fibres minérales de haute résistance thermique et des fibres métalliques afin d'offrir une résistance optimale à la température et aux chocs thermiques répétés ainsi qu'à l'agression chimique par les gaz et les condensats d'échappement.

4. Flexible de découplage selon la revendication 3, **caractérisé en ce que** les fibres minérales sont des fibres de silice, de quartz ou de céramique.

5. Flexible de découplage selon la revendication 3, **caractérisé en ce que** les fibres métalliques sont des fibres du type inoxydable en acier ou un alliage à base de nickel, par exemple.

6. Flexible de découplage selon l'une quelconque des revendications précédentes, **caractérisé en ce que** la couche (14) continue et de faible épaisseur est réalisée sous la forme d'un film métallique ou d'un film minéral constitué de particules plates laminées sur un support textile ou métallique.

7. Flexible de découplage selon la revendication 6, **caractérisé en ce que** le film métallique est un film du type inoxydable en acier ou un alliage à base de nickel, par exemple.

8. Flexible de découplage selon l'une quelconque des revendications précédentes, **caractérisé en ce que** la couche (16) forme un matelas d'isolation thermique constitué par un feutre aiguilleté ou un tissu tridimensionnel de forte densité et suffisamment épais pour que la température externe du flexible ne dépasse pas une valeur de l'ordre de 350°C.

9. Flexible de découplage selon l'une quelconque des revendications précédentes, **caractérisé en ce que** la couche externe de protection (18) contre les agents extérieurs et l'étanchéité par l'extérieur, est réalisée par un revêtement à base d'élastomère résistant à haute température et renforcé par un treillis métallique ou textile à haute résistance mécanique.

10. Flexible de découplage selon la revendication 9, **caractérisé en ce que** l'ensemble (E) des couches du flexible est bloqué en position par l'ossature métallique (10) sans avoir recours à un agent d'adhérisation entre les couches.

11. Flexible de découplage selon la revendication 10, **caractérisé en ce qu'**il comprend :
- au moins une ossature métallique interne (10a) de maintien des différentes couches et permettant de conserver le dimensionnel intérieur du flexible malgré les sollicitations imposées,
- une couche interne (12) en contact direct avec le flux de gaz chaud et qui puisse résister durablement aux contraintes thermiques rencontrées, ainsi qu'à l'attaque chimique par les gaz et les condensats d'échappement, tout en conservant une grande souplesse de déplacement et/ou de déformation,
- une ou plusieurs couches (14) formant barrière d'étanchéité aux gaz d'échappement sous pression et ce, à la température du flux de gaz,
- une ou plusieurs couches d'isolation thermique (16) permettant de réduire la température du flux de gaz vers l'extérieur du flexible,
- une couche externe (18) étanche à la pénétration d'eau par l'extérieur du flexible et suffisamment résistante pour supporter les diverses formes d'agression rencontrées sous la caisse du véhicule, et
- au moins une ossature externe (10b) qui assure le maintien en position des différentes couches ainsi superposées sans agent d'adhésion intermédiaire et qui, de par son positionnement permet au flexible d'avoir la souplesse d'ensemble requise.

## Patentansprüche

1. Flexible Entkopplungsvorrichtung, die in eine Auspuffanlage (L) eines Kraftfahrzeugmotors (V) eingebaut werden kann, wobei diese Entkopplungsvorrichtung (5) wenigstens eine metallische, zylindrische Tragstruktur (10) aufweist, die biegsam und in jeder Richtung elastisch verformbar ist und die als Stütze für eine Konstruktion (E) aus übereinanderliegenden Schichten dient, wobei diese Konstruktion (E) aus Schichten wenigstens eine Schicht (12), die aus Geweben auf der Basis von Mineralfasern und/oder aus Metallfasern gebildet ist, eine Abdichtungsschicht (14) geringer Dicke, die aus einem Metall-, Mineral- oder Polymerband gebildet ist, eine Wärmeisolationsschicht (16), die ausreichend dick ist, um die äußere Temperatur der Entkopplungsvorrichtung zu reduzieren, und eine äußere Schutzschicht (18) umfasst, **dadurch gekennzeichnet, dass** die metallische Tragstruktur (10) wenigstens eine innere Tragstruktur (10a) und eine äußere Tragstruktur (10b) aufweist, die die Konstruktion (E) aus den Schichten (12, 14, 16, 18) umgibt, um die Schichten in ihrer Lage festzuhalten, und dadurch, dass die innere Tragstruktur (10a) und die äußere Tragstruktur (10b) gleichermaßen dazu ausgelegt sind, als flexibles Mittel zur Verbindung der Entkopplungsvorrichtung mit der Auspuffanlage (L) des Kraftfahrzeugs zum Beispiel mit Hilfe von zusammengesetzten Ringflanschen oder durch eine Bördel-oder Quetschverbindung dient.

2. Flexible Entkopplungsvorrichtung nach Anspruch 1, **dadurch gekennzeichnet, dass** die innere (10a) und die äußere Tragstruktur (10b) jeweils in Form von wenigstens einer zylindrischen Schraubenfeder (Ra/Rb) mit im mittleren oder aktiven Teil der Entkopplungsvorrichtung nicht zusammenliegenden Windungen, und mit an ihren beiden Enden zusammenliegenden Windungen gebildet ist.

3. Flexible Entkopplungsvorrichtung nach einem der vorstehenden Ansprüche, **dadurch gekennzeichnet, dass** die aus Mineralfasern und/oder aus Metallfasern gebildete Schicht (12) eine innere Schicht ist, die in direktem Kontakt mit dem heißen Abgasstrom steht und die aus einem komplexen Gewebe hergestellt ist, in dem Mineralfasern hoher Wärmebeständigkeit und Metallfasern miteinander verbunden sind, um eine optimale Widerstandsfähigkeit gegenüber der Temperatur und wiederholten Wärmeschocks sowie gegenüber dem chemischen Angriff durch Gase und Abgaskondensate zu bieten.

4. Flexible Entkopplungsvorrichtung nach Anspruch 3, **dadurch gekennzeichnet, dass** die Mineralfasern Fasern aus Siliziumdioxid, Quarzfasern oder keramische Fasern sind.

5. Flexible Entkopplungsvorrichtung nach Anspruch 3, **dadurch gekennzeichnet, dass** die Metallfasern Fasern vom nicht-oxidierenden Typ, zum Beispiel aus Stahl oder aus einer auf Nickel basierenden Legierung sind.

6. Flexible Entkopplungsvorrichtung nach einem der vorstehenden Ansprüche, **dadurch gekennzeichnet, dass** die durchgängige Schicht (14) von geringer Dicke in Form eines Metallfilms oder Mineralfilms realisiert ist, der aus flachen Teilchen gebildet ist, die auf einen textilen oder metallischen Träger aufgewalzt sind.

7. Flexible Entkopplungsvorrichtung nach Anspruch 6, **dadurch gekennzeichnet, dass** der Metallfilm ein Film vom nicht-oxidierenden Typ, zum Beispiel aus Stahl oder aus einer auf Nickel basierenden Legierung ist.

8. Flexible Entkopplungsvorrichtung nach einem der vorstehenden Ansprüche, dadurch gekennzeichent, dass die Schicht (16) ein wärmeisolationspolster bildet, das aus vernähtem Filz oder aus einem dreidimensionalen Gewebe hoher Dichte und ausreichender Dicke aufgebaut ist, so dass die äußere Temperatur der Entkopplungsvorrichtung einen Wert in der Größenordnung von 350° C nicht übersteigt.

9. Flexible Entkopplungsvorrichtung nach einem der vorscehenden Ansprüche, **dadurch gekennzeichnet, dass** die äußere Schutzschicht (18) gegen äußere Agenzien und zur Dichtheit von außen aus einer Verkleidung auf der Grundlage eines Elastomers hergestellt ist, die eine hohe Temperaturbeständigkeit aufweist und durch ein metallisches oder textiles Geflecht hoher mechanischer Festigkeit verstärkt ist.

10. Flexible Entkopplungsvorrichtung nach Anspruch 9, **dadurch gekennzeichnet, dass** die Konstruktion (E) aus den Schichten der Entkopplungsvorrichtung durch die metallische Tragstruktur (10) in ihrer Lage gehalten wird, ohne von einem Haftmittel zwischen den Schichten Gebrauch zu machen.

11. Flexible Entkopplungsvorrichtung nach Anspruch 10, **dadurch gekennzeichnet, dass** die Folgendes umfasst:
- wenigstens eine innere, metallische Tragstruktur (10a) zum Halten der verschiedenen Schichten, die es ermöglicht, trotz der auferlegten Belastungen die innere Dimensionierung der Entkopplungsvorrichtung aufrecht zu erhalten;
- eine innere Schicht (12), die sich in direktem Kontakt mit dem heißen Gasstrom befindet und die dauerhaft den auftretenden thermischen Beanspruchungen sowie dem chemischen Angriff durch Gase und Abgaskondensate widerstehen kann und dabei eine große Flexibilität der Verschiebung und/oder der Verformenung bewahrt;
- eine oder mehrere Schichten (14), die eine Dichtheitsbarriere für die Abgase unter Druck bilden, und dies bei der Temperatur des Gasstromes;
eine oder mehrere Wärmeisolationsschichten (16), die es ermöglichen, die Temperatur des Gasstromes nach außen der Entkopplungsvorrichtung zu reduzieren;
- eine äußere Schicht (18), die gegenüber dem Eindringen von Wasser von außen in die Entkopplungsvorrichtung dicht ist und ausreichend widerstandsfähig ist, um den verschiedenen Belastungsarten standzuhalten, die unter der Fahrzeugkarosserie auftreten; und
- wenigstens eine äußere Tragstruktur (10b), die die Aufrechterhaltung der Lage der verschiedenen so übereinanderliegenden Schichten ohne dazwischenliegendes Haftmittel gewährleistet, und die es ermöglicht, dass die Entkopplungsvorrichtung in Folge seiner Positionierung die erforderliche Flexibilität der Konstruktion aufweist.

## Claims

1. A decoupling hose suitable for mounting in an exhaust pipe assembly (L) for the engine of a motor vehicle (V), the hose (5) comprising at least one cylindrical metal framework (10) that is flexible and deformable in all directions in elastic manner, and that serves as a support for a set (E) of superposed layers, said set (E) of layers comprising at least one layer (12) made up of cloth based on inorganic and/or metal fibers, a thin sealing layer (14) constituted by a metal, inorganic, or polymer foil, a thermal insulation layer (16) that is sufficiently thick to reduce the outside temperature of the hose, and an outer protective layer (18), the hose being **characterized in that** the metal framework (10) comprises at least an internal framework (10a) and an external framework (10b) which surround the set (E) of layers (12, 14, 16, 18) so as to lock them in position, and **in that** the internal and external frameworks (10a, 10b) are also designed to serve as connecting means for connecting the hose to the exhaust pipe assembly (L) of the vehicle via clamping collars or by crimping, for example.

2. A decoupling hose according to claim 1, **characterized in that** the internal and external frameworks (10a, 10b) are each implemented in the form of at least one helical spring (Ra/Rb) having non-touching turns in the central or active portion of the hose, and touching turns at each end.

3. A decoupling hose according to any preceding claim, **characterized in that** the layer (12) made of cloth based on inorganic and/or metal fibers is an inner layer in direct contact with the flow of hot exhaust gases, which inner layer is made from a composite cloth combining inorganic fibers capable of withstanding high temperatures and metal fibers so as to provide good resistance to temperature and to repeated thermal shocks, and also good resistance to chemical attack by the exhaust gases and condensates.

4. A decoupling hose according to claim 3, **characterized in that** the inorganic fibers are fibers of silica, quartz, or glass.

5. A decoupling hose according to claim 3, **characterized in that** the metal fibers are fibers of the stainless type, being made of steel or a nickel-based alloy, for example.

6. A decoupling hose according to any preceding claim, **characterized in that** the thin continuous layer (14) is implemented in the form of a metal film or an inorganic film made up of rolled flat particles on a textile or metal backing.

7. A decoupling hose according to claim 6, **characterized in that** the metal film is a film of the stainless type made of steel or a nickel-based alloy, for example.

8. A decoupling hose according to any preceding claim, **characterized in that** the thermal insulation layer (16) forms thermal insulation wadding constituted by a needled felt or a three-dimensional cloth of high density, and is sufficiently thick to ensure that the outside temperature of the hose does not exceed a value of the order of 350°C.

9. A decoupling hose according to any preceding claim, **characterized in that** the outer protective layer (18) providing protection against external agents and sealing against the outside is implemented by a coating based on an elastomer that withstands high temperature and is reinforced by metal latticework or cloth having high mechanical strength.

10. A decoupling hose according to claim 9, **characterized in that** the set (E) of layers in the hose is locked in position by the metal framework (10) without having recourse to a bonding agent between the layers.

11. A decoupling hose according to claim 10, **characterized in that** it comprises:
· at least one internal metal framework (10a) for holding the various layers and serving to maintain the inside dimensions of the hose in spite of the stresses applied thereto;
· an inner layer (12) in direct contact with the flow of hot gases and capable of durably withstanding the thermal stresses encountered, and also capable of durably withstanding chemical attack from exhaust gases and condensates, while conserving a high degree of flexibility in displacement and/or deformation;
· one or more layers (14) forming a sealing barrier to exhaust gases under pressure, and capable of doing so at the temperature of the gas flow;
· one or more thermal insulation layers (16) enabling temperature to drop from the gas flow to the outside of the hose;
· an external layer (18) that is proof against water penetrating from the outside of the hose and that is strong enough to withstand the various forms of attack that are to be encountered beneath the bodywork of the vehicle; and
· at least one external framework (10b) which holds in position the various layers superposed in this way, without any intermediate bonding agent and which, by virtue of its positioning, enables the hose to have the required overall flexibility.
